(19) Europäisches Patentamt
European Patent Office
Office européen des brevets

(11) **EP 4 738 738 A1**

(12) **EUROPEAN PATENT APPLICATION**

(43) Date of publication:
**06.05.2026 Bulletin 2026/19**

(51) International Patent Classification (IPC):
**H04L 1/00** $^{(2006.01)}$     **H04B 17/00** $^{(2015.01)}$
**H04L 1/20** $^{(2006.01)}$

(21) Application number: **25213253.5**

(22) Date of filing: **04.11.2025**

(52) Cooperative Patent Classification (CPC):
**H04L 1/0001; H04B 17/00; H04L 1/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.11.2024 US 202463716454 P**
**20.03.2025 US 202519085576**

(71) Applicant: **Avago Technologies International Sales Pte. Limited**
**Singapore 768923 (SG)**

(72) Inventor: **Pulikkoonattu, Rethnakaran**
**Irvine, 92618 (US)**

(74) Representative: **Dilg, Haeusler, Schindelmann Patentanwaltsgesellschaft mbH**
**Leonrodstraße 58**
**80636 München (DE)**

(54) **SYSTEMS AND METHODS FOR SIGNAL TO NOISE RATIO (SNR) AND NOISE VARIANCE ESTIMATION FROM ERROR VECTOR MAGNITUDE (EVM)**

(57) An apparatus includes a receiver configured to receive data, and circuitry configured to receive one or more symbols based at least on the data, determine, using the one or more symbols, an error vector magnitude (EVM) value, identify a quadrature amplitude modulation (QAM) size, determine, using the EVM value and the QAM size, a signal-to-noise (SNR) value, and adjust, based at least on the SNR value, a transmission rate of a transmitter.

FIG. 2

## Description

### Field of the Disclosure

This disclosure generally relates to systems and methods for signal to noise ratio (SNR) and noise variance estimation from error vector magnitude (EVM) by means of a fixed look up table mapping for quadrature amplitude modulation (QAM) modulated systems.

### Background

The market for wireless communication devices has been growing due to increased use of portable devices, increased connectivity and data transfer between all manners of devices. Digital switching techniques have facilitated the large scale deployment of affordable, easy-to-use wireless communication networks. Wireless communication can operate in accordance with various standards, such as the IEEE 802.11x (e.g., Wi-Fi technology), Bluetooth, global system for mobile communications (GSM), code division multiple access (CDMA). Using such technologies, wireless communication devices can connect to local area networks and the internet without physical cables, communicating over radio frequencies and across various spaces and ranges.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.

FIG. 1A is a block diagram depicting a network environment, according to some embodiments;
FIGS. 1B and 1C are block diagrams depicting computing devices useful in connection with the methods and systems described herein, according to some embodiments;
FIG. 2 shows a block diagram of an example system, according to one or more embodiments;
FIG. 3A illustrates an example plot showing non-linear relationships between SNR and EVM, according to one or more embodiments;
FIG. 3B illustrates an example LUT, according to one or more embodiments;
FIG. 4A illustrates an example plot showing non-linear relationships between SNR and EVM, according to one or more embodiments;
FIG. 4B illustrates an example LUT, according to one or more embodiments;
FIG. 5 illustrates an example plot showing a relationship between SNR and EVM, according to one or more embodiments;
FIG. 6A illustrates an example of transmitted constellation, according to one or more embodiments;
FIG. 6B illustrates an example of received constellation corresponding to the transmitted constellation of FIG. 6A, according to one or more embodiments;
FIG. 7A illustrates an example of transmitted constellation, according to one or more embodiments;
FIG. 7B illustrates an example of received constellation corresponding to the transmitted constellation of FIG. 7A, according to one or more embodiments;
FIG. 8 is a flow diagram showing a process for SNR and noise variance estimation from EVM, in accordance with an embodiment.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.
The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a™, IEEE 802.11b™, IEEE 802.11g™, IEEE P802.11n™; IEEE P802.11ac™; and IEEE P802.11be™ through IEEE P802.11bn™ standards. Although this disclosure can reference aspects of these standard(s), the disclosure is in no way limited by these standard(s).

For purposes of reading the description of the various embodiments below, the following descriptions of the sections of the specification and their respective contents can be helpful:

- Section A describes a network environment and computing environment which can be useful for practicing embodiments described herein; and
- Section B describes embodiments systems and methods for signal to noise ratio (SNR) and noise variance estimation from error vector magnitude (EVM).

<u>A. Computing and Network Environment</u>

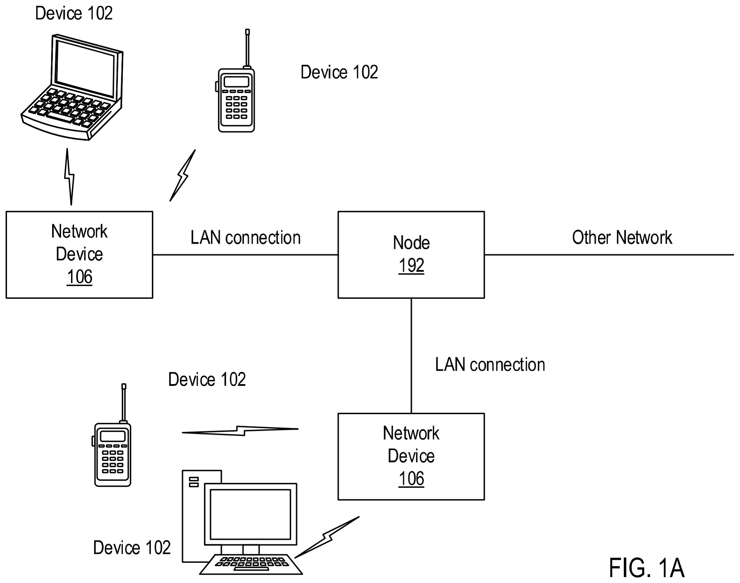

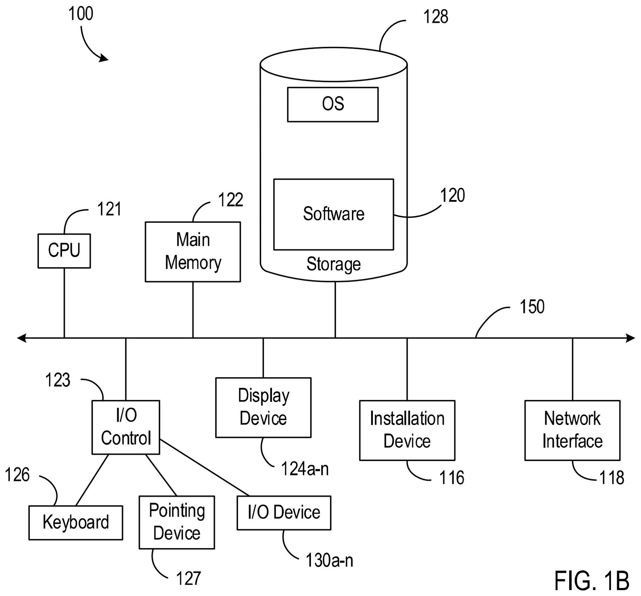

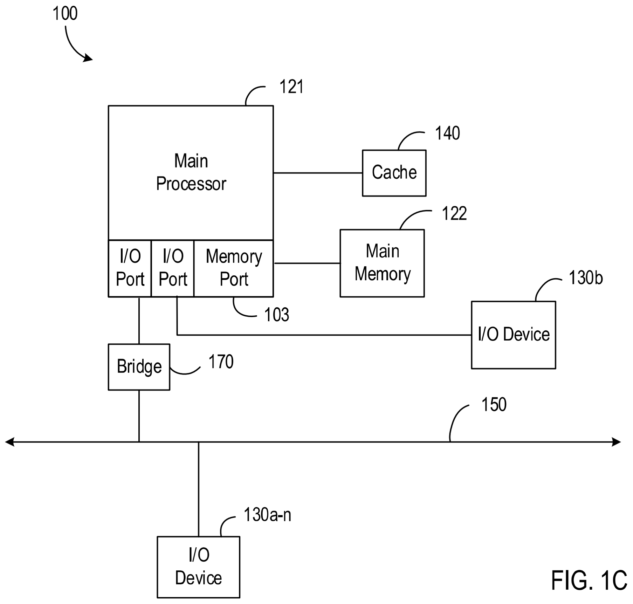

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

B. Signal to Noise Ratio and Noise Variance Estimation from Error Vector Magnitude

In communication systems, accurate signal quality estimation (e.g., SNR, noise variance) is useful for optimizing performance in various applications, such as maximum a posteriori (MAP)-based detection, iterative de-mapping for single-input, single-output (SISO) and multiple-input, multiple-output (MIMO) systems, minimum mean squared error (MMSE) receivers, noise whitening circuits, rate adaptation based on signal-to-interference ratio (SINR) and/or SNR feedback, feedback systems, and low-density parity-check (LDPC) decoders where input log-likelihood ratios (LLRs) are scaled by noise variance. In particular, SNR estimation plays a significant role in rate adaptation for wireless communication systems like WiFi (e.g., 802.11ax/be/bn) and LTE. Rate adaptation allows the system to dynamically adjust the transmission parameters (e.g., modulation and coding scheme) to match the current channel conditions, improving data throughput while maintaining a reliable connection. For example, a higher SNR indicates a cleaner signal with less interference from noise, allowing for faster, more efficient data transmission. A transmitter can use more complex and higher data rate modulation schemes (e.g., 64-QAM, 256-QAM, or even 1024-QAM), which carry more bits per symbol.

Conversely, a lower SNR indicates poor channel conditions, where using complex modulation would lead to errors. In such cases, the system can adapt by using more robust but lower data rate modulation schemes (e.g., QPSK or BPSK), which have fewer bits per symbol but are less susceptible to errors.

In general, a receiver can estimate the SNR or a related measure of SNR (e.g., EVM) of the received signal and send this information back to the transmitter, for example, for the overall link or per subcarrier (e.g., in OFDM-based systems like WiFi and LTE). Based on this feedback, the transmitter can adjust its transmission rate dynamically. In some implementations, EVM can be used instead, and the transmitter deciphers the SNR based on the available information received. Typically, different modulation and coding schemes (MCS) are suitable for different SNR ranges. Each MCS defines a modulation scheme (e.g., BPSK, QPSK, 16-QAM, 64-QAM, 256-QAM, 1024-QAM) with a coding rate that specifies how much error correction is applied to the transmitted data. There may be a predefined mapping between the SNR and the MCS in the system, such that when the transmitter receives the SNR feedback, it selects the most appropriate MCS corresponding to the reported SNR, thereby selecting the highest MCS that the current SNR can support with reduced errors. For example, with a lower SNR (e.g., < 10 dB), the transmitter may use BPSK or QPSK with a low coding rate (more redundancy) to ensure reliable communication. With a moderate SNR (e.g., 15-20 dB), the transmitter may switch to 16-QAM or 64-QAM with a moderate coding rate to increase throughput. With a higher SNR (e.g., > 30 dB), the transmitter can use 256-QAM or 1024-QAM with a high coding rate (less redundancy) to maximize data throughput. Wireless channels are dynamic and adapt to changing channel conditions (e.g., due to movement, interference, or environmental factors). For example, in response to an increase in SNR, the feedback to the transmitter allows it to switch to a higher data rate by using a higher-order modulation and a higher coding rate. In response to a decrease in SNR, the feedback ensures that the transmitter reduces the data rate by switching to a more robust MCS to maintain reliability and minimize errors. This adjustment optimizes performance, balancing between maximizing throughput and ensuring reliability.

However, precise SNR estimation is challenging, often relying on approximation, heuristic methods, or prior signals and measurements during idle states, which are resource-heavy and time-sensitive. This is especially true when signal quality can vary from packet to packet. While EVM is simpler to compute than SNR in digitally modulated communication systems, its relationship with SNR is not straightforward (e.g., not a one-to-one mapping) and varies with the QAM size. This limitation creates inefficiencies in system optimization and feedback mechanisms. Additionally, while data-aided EVM computation is impractical because the exact transmit symbol is not known at the receiver, non-data-aided (NDA) EVM can be used to measure EVM. NDA-EVM is easier to compute and does not require knowledge of the QAM size, making it a more practical alternative.

The present disclosure addresses the above-mentioned challenges by providing techniques for signal quality estimation that enhance accuracy and reliability, thereby optimizing communication system performance across various applications. The present disclosure provides techniques for estimating SNR and noise variance from EVM. Unlike previous approaches that rely on approximations or heuristic mappings, the techniques disclosed herein establish a precise, one-to-one relationship between EVM and SNR for any QAM size, by establishing non-linear relationships between NDA-EVM and SNR for a given QAM size. In some embodiments, the techniques include a fixed look-up table (LUT) or a dictionary, precomputed and stored for efficient retrieval, to map the relationships between EVM and SNR, enabling accurate and computationally efficient SNR estimation. This enhances signal quality assessment in various applications, including but not limited to receivers, transmitters, and any systems where precise signal characterization is used. The "look-up table (LUT)" as used herein may refer to an array that replaces runtime computation with a simpler array indexing operation, a physical representation of attributes storing information for an attribute in identifier and/or description columns, a data structure storing information for one or more related attributes, or any data structure that maps input values to output values.

With the foregoing in mind, the figures and description below illustrate various examples of the techniques for SNR and noise variance estimation from EVM. The figures and description below are non-limiting examples and can be implemented as any of various other configurations while remaining within the scope of the present disclosure. Other embodiments can be used in addition or instead. Details that can be apparent to a person of ordinary skill in the art may be omitted. Some embodiments can be practiced with additional components or steps and/or without all of the components or steps that are described.

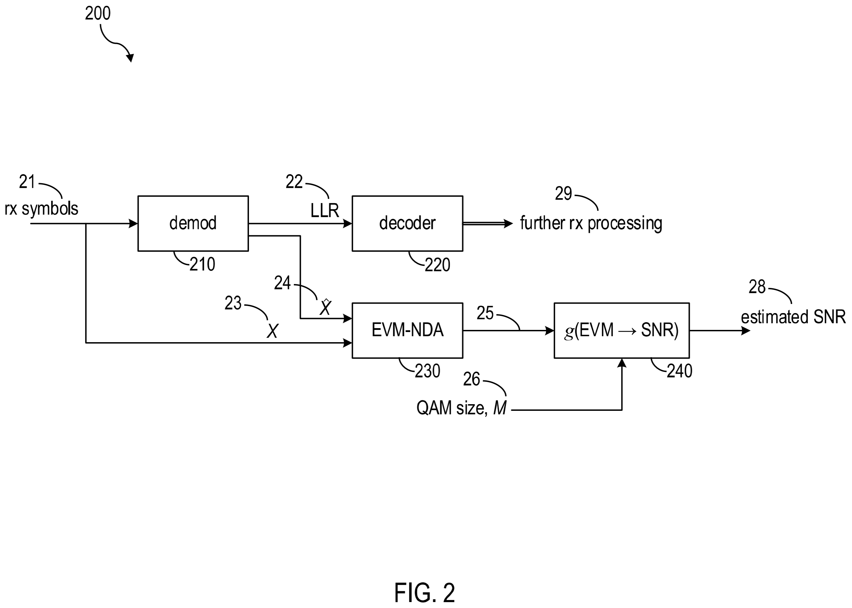

FIG. 2 shows a block diagram of an example system 200, according to one or more embodiments. The system 200 may be part (e.g., circuitry) of an "apparatus." The "apparatus" as used herein may refer to a device (e.g., the device 102), a network device (e.g., the network device 106), or any device to facilitate wireless communication and/or form a wireless communication network. In some embodiments, the apparatus may include a "transmitter," a "receiver," and/or various circuit components. The "transmitter" as used herein may refer to a radio frequency (RF) transmitter, an optical transmitter, a millimeter-wave transmitter, a baseband signal generator, or any device, circuitry, or system that can generate, encode, and transmit wireless signals over a communication medium. The "receiver" as used herein may refer to an RF receiver, an optical receiver, a millimeter-wave receiver, or any device, circuitry, or system that can receive, decode, and process wireless signals from a communication medium.

In some embodiments, the system 200 may be or include "circuitry." The "circuitry" as used herein may refer to analog or digital circuits, integrated circuits (ICs), system-on-chip (SoC) components, field-programmable gate arrays (FPGAs), microcontrollers, processors, or any combination of software, firmware, and/or hardware configured to perform signal transmission, reception, processing, or control functions in a wireless communication system. In some embodiments, the system 200 may be circuitry of a receiver.

The system 200 is shown to include a demodulator 210, a decoder 220, an EVM-NDA unit 230, and a function mapping unit 240. Each of the demodulator 210, the decoder 220, the EVM-NDA unit 230, and the function mapping unit 240 may be or include circuitry, firmware, or software that can be configured to process given data.

In a brief overview, the apparatus includes a receiver configured to receive data. The system 200 can be configured to receive one or more symbols (e.g., rx symbols 21) based at least on the data. The demodulator 210 can be configured to receive the one or more symbols (e.g., rx symbols 21). The demodulator 210 can be configured to send a log-likelihood ratio (LLR) 22 to the decoder 220 for further rx processing 29. The demodulator 210 can be configured to send an estimated symbol vector 24 to the EVM-NDA unit 230. The EVM-NDA unit 230 can be configured to receive a transmitted symbol vector 23 based on the one or more symbols (e.g., rx symbols 21). The EVM-NDA unit 230 can be configured to determine, using the one or more symbols (e.g., rx symbols 21), an EVM value 25. The EVM-NDA unit 230 can be configured to send the EVM value 25 to the function mapping unit 240. The function mapping unit 240 can be configured to receive and/or identify a QAM size 26. The function mapping unit 240 can be configured to determine, using the EVM value 25 and the QAM size 26, an SNR value 28. The system 200 and/or the apparatus thereof can be configured to adjust, based at least on the SNR value 28, a transmission rate of a transmitter.

Although described and shown for receiver circuitry, the system 200 can be implemented for any other apparatus components, without departing from spirit and scope. In some embodiments, the apparatus may include a transmitter configured to transmit data. The apparatus may include transmitter circuitry configured to receive one or more symbols based at least on data received by a receiver. The transmitter circuitry can be configured to determine, using the one or more symbols, an EVM value. The transmitter circuitry may include the function mapping unit 240 configured to receive and/or identify a QAM size (e.g., similar to the QAM size 26). The function mapping unit 240 of the transmitter circuitry can be configured to determine, using the EVM value and the QAM size, an SNR value (e.g., similar to the SNR value 28). The transmitter circuitry and/or the apparatus thereof can be configured to adjust, based at least on the SNR value, a transmission rate. The transmitter of the apparatus can be configured to transmit data using the transmission rate (e.g., adjusted based at least on the SNR value).

The apparatus can be configured to receive and/or various data. As used herein, "data" may refer to digital or analog information, including but not limited to, bit streams, encoded symbols, packets, frames, control signals, content, sensor readings, or any information that can be received, transmitted, modulated, processed, or stored in a wireless communication system.

The receiver of the apparatus can be configured to receive the data. The system 200 (e.g., receiver circuitry) of the apparatus can be configured to receive the rx symbols 21 based at least on the data. The demodulator 210 can be configured to process the rx symbols 21 by mapping the same to the LLR 22, which indicates the probability of each bit being "0" or "1." As used herein, the "symbols" may refer to a unit of encoded data representing one or more bits, which is modulated onto a carrier signal for transmission in a wireless communication system, including but not limited to, QAM symbols, phase-shift keying (PSK) symbols, or any modulated representation of data that can be transmitted, received, and processed in a communication network. The demodulator 210 can be configured to send the LLR 22 to the decoder 220. The decoder 220 can be configured to apply various algorithms (e.g., error correction algorithms, decoding algorithms, etc.) to reconstruct original transmitted data. The decoder 220 can be configured to output the reconstructed data for the further rx processing 29.

The demodulator 210 can be configured to process the rx symbols 21 to generate the estimated symbol vector 24. In some embodiments, the estimated symbol vector 24 can be determined based on a decision-directed method where the received signal is demodulated to produce an estimate of the transmitted symbols. In some embodiments, the estimated symbol vector 24 can be determined based on a predefined metric (e.g., those defined in IEEE 8802.11 standards, etc.). In some embodiments, the rx symbols 21 can be demodulated using maximum likelihood (or similar decision criterion) to generate the estimated symbol vector 24. Meanwhile, the transmitted symbol vector 23 (e.g., which can represent an expected or known transmitted symbol vector) can be determined based on the rx symbols 21.

The EVM-NDA unit 230 can be configured to determine, using the rx symbols 21, the EVM value 25. In some embodiments, the EVM-NDA unit 230 can be configured to generate the EVM value 25 by processing the transmitted symbol vector 23 and the estimated symbol vector 24. In some embodiments, the EVM-NDA unit 230 can be configured to calculate the EVM value 25 by averaging Euclidean distances between the transmitted symbol vector 23 and the estimated symbol vector 24. More specifically, an EVM can be a measure of the deviation of a received signal from an ideal transmitted signal, which quantifies the amount of distortion (e.g., including noise, channel effects, etc.) in the received signal. For example, the NDA EVM can be defined as: $\mathrm{EVM_{NDA}} = \frac{\|Y - \hat{X}\|}{\|\hat{X}\|}$, where $Y$ is the received signal vector, and $\hat{X}$ is

the estimated transmitted symbol vector (e.g., decision-directed, the estimated symbol vector 24, etc.).

The function mapping unit 240 can be configured to receive and/or identify the QAM size 26. As used herein, the term "QAM size" (sometimes represented by "M" herein) may refer to the number of distinct symbols used in QAM, which can determine the number of bits each symbol represent, such as 16-QAM (4 bits per symbol), 64-QAM (6 bits per symbol), or any other size representing the modulation order to define the data rate and spectral efficiency of the communication system. In some embodiments, the function mapping unit 240 can be configured to identify the QAM size 26 by analyzing the received signal's characteristics, such as the spacing between symbols in the modulation constellation. In some embodiments, the function mapping unit 240 can be configured to receive the QAM size 26 from predefined system parameters or reference signals transmitted alongside the data. In some embodiments, the function mapping unit 240 can be configured to identify the QAM size 26 from a modulation and coding schemes (MCS) table. As used herein, the "MCS table" may refer to a look-up table (e.g., an MCS look-up table), a matrix, or any data structure that stores the QAM size 26, for example including different modulation schemes, coding rates, etc. to specific transmission rates.

The function mapping unit 240 can be configured to determine, using the EVM value 25 and the QAM size 26, the estimated SNR value 28. In some embodiments, the function mapping unit 240 can be configured to determine the estimated SNR value 28 based on an M-dependent relationship between the EVM value 25 and the SNR value 28. That is, the function mapping unit 240 can be configured to generate and/or identify the estimated SNR value 28 based on a function of SNR and QAM size, M (e.g., $EVM^2 = f(SNR, M)$). The function mapping unit 240 can be configured to generate and/or identify the estimated SNR value 28 using a nonlinear relationship between the SNR value 28 and the QAM size 26. In some embodiments, the function mapping unit 240 can be configured to generate and/or identify the estimated SNR value 28, based on:

$$\text{Eq. }(1)\ EVM^2 = f(SNR, M) = \frac{1}{SNR} - 8\sqrt{\frac{3}{2\pi(M-1)\cdot SNR}}\sum_{i=1}^{\sqrt{M}-1}\left(1 - \frac{i}{\sqrt{M}}\right)\exp\left(-\frac{3(2i-1)^2\cdot SNR}{2(M-1)}\right) + \frac{12}{M-1}\sum_{i=1}^{\sqrt{M}-1}\left(1 - \frac{i}{\sqrt{M}}\right)(2i-1)\cdot erfc\left(\sqrt{\frac{3(2i-1)^2\cdot SNR}{2(M-1)}}\right).$$

In some embodiments, the function mapping unit 240 can be configured to generate the estimated SNR 28 by mapping the EVM value 25 to the SNR, based on the relationship (e.g., Eq. (1)) between the EVM value 25 and the SNR value 28. In some embodiments, the function mapping unit 240 can be configured to generate the estimated SNR 28 by inversely mapping the SNR to the EVM value 25, based on the relationship (e.g., Eq. (1)) between the EVM value 25 and the SNR value 28. As shown above, in some embodiments, the function mapping unit 240 can be configured to, calculate the estimated SNR value 28 corresponding to the EVM value 25 based at least on the QAM size 26.

As discussed in greater detail below, the function mapping unit 240 can be configured to identify the estimated SNR value 28 using a look-up table (LUT; e.g., an EVM-SNR LUT), an interpolation (e.g., linear interpolation, etc.), etc. The function mapping unit 240 can be configured to generate the estimated SNR 28 in various manners. In some embodiments, the function mapping unit 240 can be configured to generate the estimated SNR 28 on a linear scale, a logarithmic scale, etc.

The receiver circuitry, transmitter circuitry, etc., or the apparatus thereof can be configured to adjust, based the estimated SNR value 28, a transmission rate. As used herein, the "transmission rate" may refer to the amount of data transmitted per unit of time in a communication system that can be influenced by factors such as modulation scheme, coding rate, signal quality, channel conditions, etc. The transmitter of the apparatus can be configured to transmit data using the transmission rate (e.g., adjusted based at least on the SNR value 28).

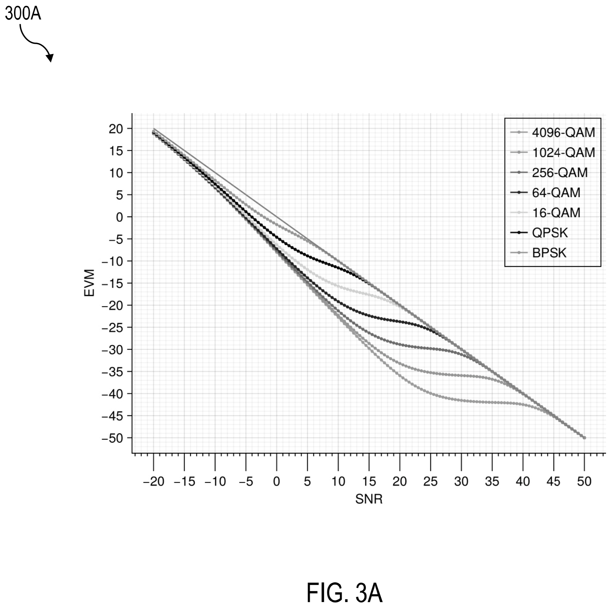

Referring to FIG. 3A, an example plot 300A is illustrated showing non-linear relationships between SNR and EVM, according to one or more embodiments. In some embodiments, the function mapping unit 240 can be configured to identify the estimated SNR value 28 based on the non-linear relationships between SNR and EVM shown in the plot 300A. In some embodiments, the non-linear relationships between SNR and EVM shown in the plot 300A may be of the relationship represented by Eq. (1). The plot 300A shows different EVM-SNR relationships that depend on the QAM size, M (e.g., 16, 64, 256, 1024, 4096). Thus, the function mapping unit 240 can be configured to accurately estimate the SNR based on Eq. (1) and/or the relationships shown in the plot 300A.

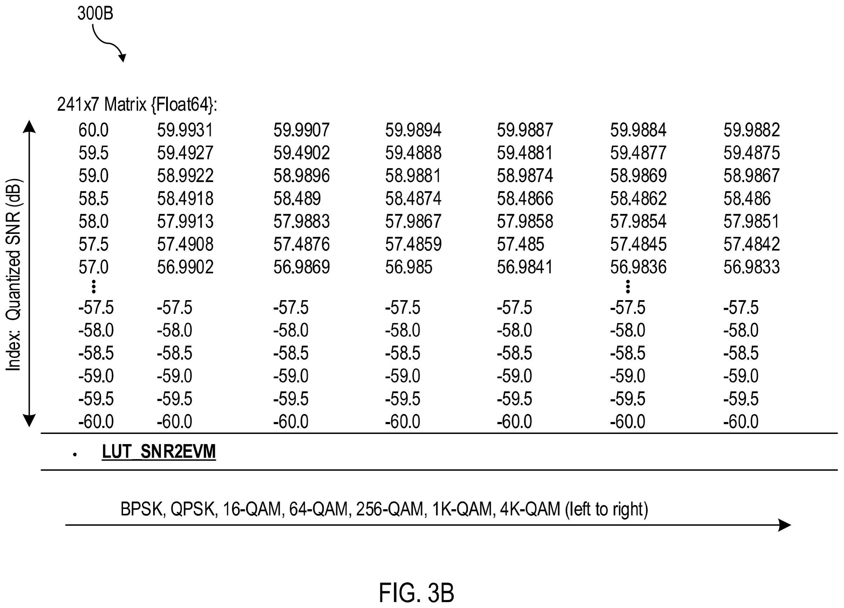

FIG. 3B illustrates an example LUT 300B, according to one or more embodiments. The term "LUT" (for the EVM-SNR relationships), as used herein, may refer to a look-up table (e.g., an EVM-SNR look-up table), a matrix, or any data structure that stores the EVM-SNR relationships (e.g., Eq. (1), SNR values as a function of EVM and M, etc.). In some embodiments, the LUT 300B may store the values plotted in the plot 300A. As shown, the LUT 300B stores quantized SNR values (in dB) for a given EVM range (e.g., BPSK in the first column, QPSK in the second column, 16-QAM in the third column, 64-QAM in the fourth column, 256-QAM in the fifth column, 1K-QAM in the sixth column, 4K-QAM in the seventh column, etc.). For example, in response to receiving data in 16-QAM, the function mapping unit 240 can be configured to identify SNR values by looking up the LUT 300B (e.g., the third column).

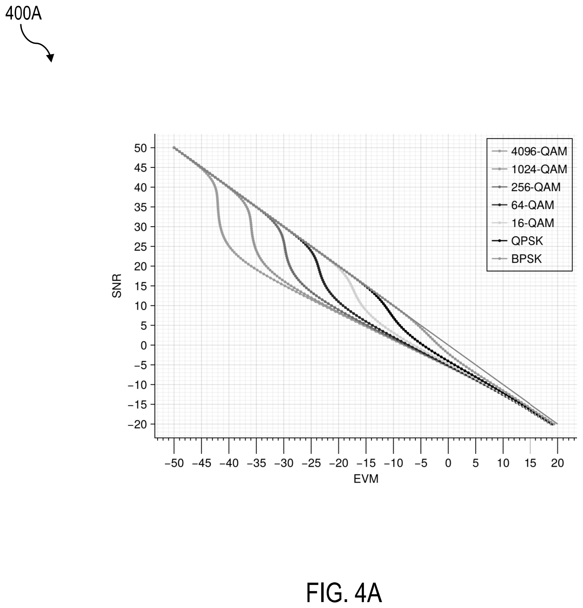

Referring to FIG. 4A, an example plot 400A is illustrated showing non-linear relationships between SNR and EVM, according to one or more embodiments. Unlike the plot 300A, in the plot 400A, the x-axis represents EVM and the y-axis represents SNR. In some embodiments, the function mapping unit 240 can be configured to identify the estimated SNR value 28 based on the non-linear relationships between SNR and EVM shown in the plot 400A. In some embodiments, the non-linear relationships between SNR and EVM shown in the plot 400A may be of the relationship represented by Eq. (1). The plot 400A shows different EVM-SNR relationships that depend on the QAM size, M (e.g., 16, 64, 256, 1024, 4096). Thus, the function mapping unit 240 can be configured to accurately estimate the SNR based on Eq. (1) and/or the relationships shown in the plot 400A.

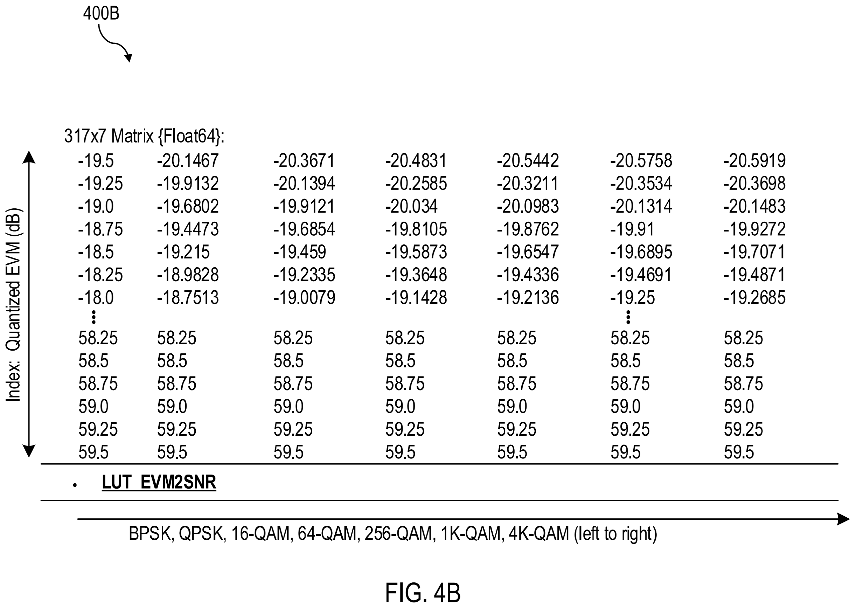

FIG. 4B illustrates an example LUT 400B, according to one or more embodiments. The LUT 400B may be an EVM-SNR LUT that stores the EVM-SNR relationships (e.g., Eq. (1), EVM values as a function of SNR and M, etc.). In some embodiments, the LUT 400B may store the values plotted in the plot 400A. As shown, the LUT 400B stores quantized EVM values (in dB) for a given SNR range (e.g., BPSK in the first column, QPSK in the second column, 16-QAM in the third column, 64-QAM in the fourth column, 256-QAM in the fifth column, 1K-QAM in the sixth column, 4K-QAM in the seventh column, etc.). For example, in response to receiving data in 16-QAM, the function mapping unit 240 can be configured to identify EVM values by looking up the LUT 400B (e.g., the third column).

As discussed with respect to FIG. 3B and FIG. 4B, the techniques disclosed herein (e.g., the system 200) can provide efficient, reliable solutions to extract accurate relationships between EVM and SNR as a function of QAM size. Furthermore, the techniques disclosed herein can find an EVM value for an unknown SNR, or vice versa, based on interpolation (e.g., Eq. (1), LUT 300B, LUT 400B, etc.), as further discussed below.

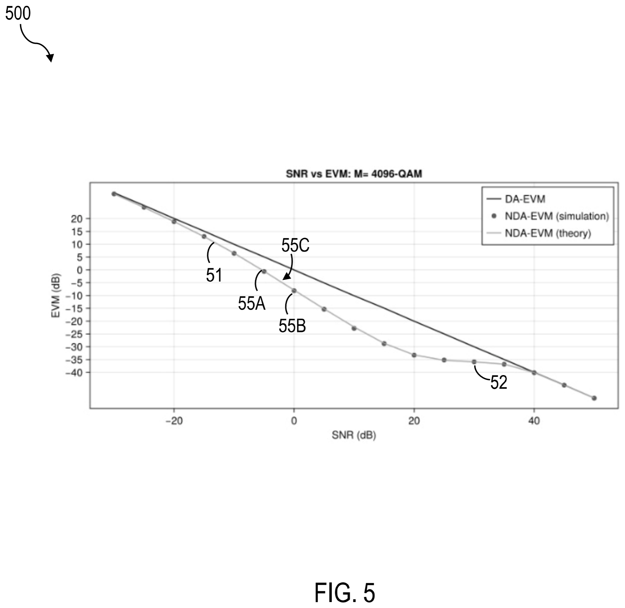

FIG. 5 illustrates an example plot 500 showing a relationship between SNR and EVM, according to one or more embodiments. The plot 500 is shown for M = 4096 as an example. In the plot 500, a non-linear line 51 ("NDA-EVM (theory)") represents an example EVM-SNR relationship based on Eq. (1), and dots 52 ("NDA-EVM (simulation)") represent values obtained from simulation. In some embodiments, the function mapping unit 240 can be configured to identify an SNR value based on interpolation of the non-linear line 51 (e.g., EVM-SNR relationship based on Eq. (1)). In some embodiments, the function mapping unit 240 can be configured to identify a first EVM value (e.g., around 0 dB for a dot 55A) and a second EVM value (e.g., around -8 dB for a dot 55B) using an LUT (e.g., the LUT 300B, the LUT 400B, etc.). The function mapping unit 240 can be configured to calculate, using an interpolation, the SNR value within a range between the first EVM value (e.g., the dot 55A) and the second EVM value (e.g., the dot 55B). For example, for an unknown point 55C, the function mapping unit 240 can be configured to calculate the SNR value based on the interpolation. As shown in FIG. 5, the non-linear line 51 is aligned with the dots 52. This allows for the EVM values between the dots 52 to be determined precisely.

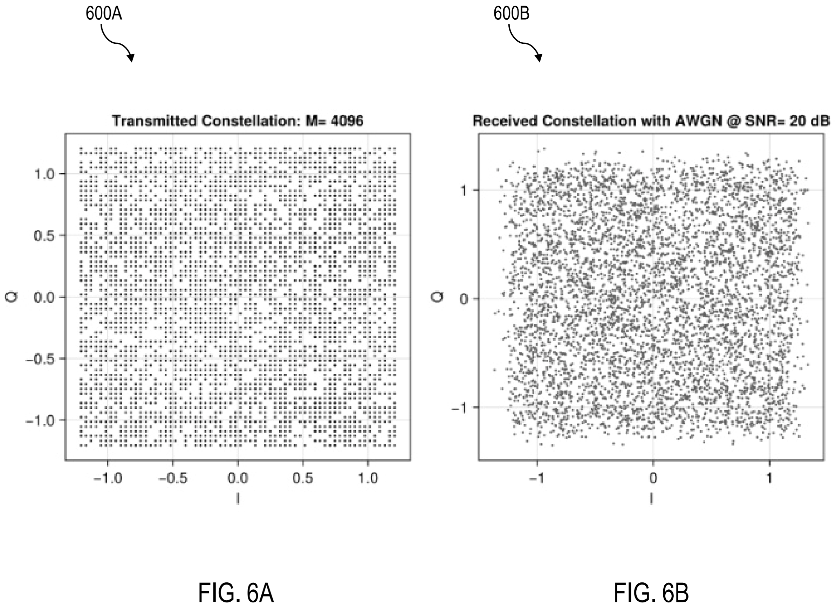

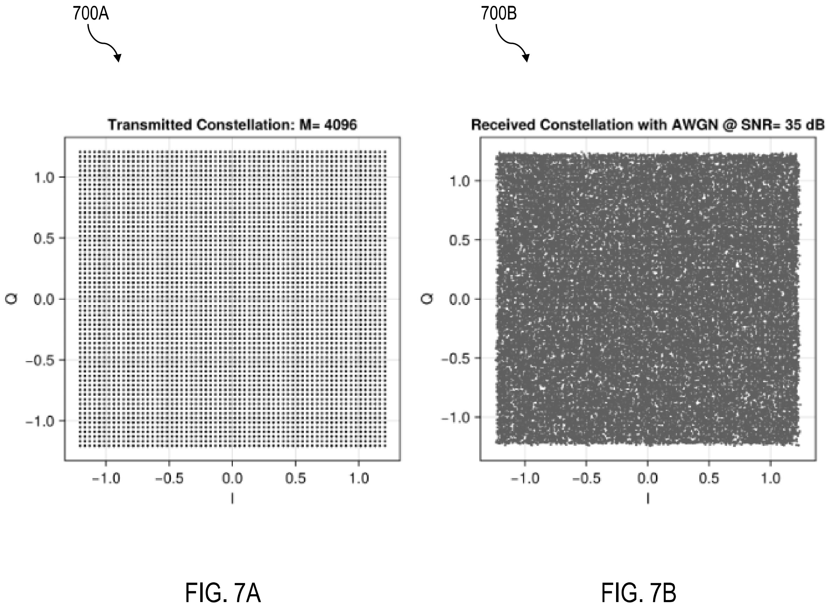

As a non-limiting example, FIG. 6A illustrates an example of transmitted constellation 600A, according to one or more embodiments. The transmitted constellation 600A is shown for M = 4096, as an example. FIG. 6B illustrates an example of received constellation 600B corresponding to the transmitted constellation 600A of FIG. 6A, according to one or more embodiments. The received constellation 600B is shown to have 20 dB SNR. The SNR of the constellation 600B can be determined based on the plot 500 (e.g., directly from the plot 500, from the LUT associated with the plot 500, from interpolation of the plot 500, etc.). As another non-limiting example, FIG. 7A illustrates an example of transmitted constellation 700A, according to one or more embodiments. The transmitted constellation 700A is shown for M = 4096, as an example. FIG. 7B illustrates an example of received constellation 700B corresponding to the transmitted constellation 700A of FIG. 7A, according to one or more embodiments. The received constellation 700B is shown to have 35 dB SNR. The SNR of the constellation 700B can be determined based on the plot 500 (e.g., directly from the plot 500, from the LUT associated with the plot 500, from interpolation of the plot 500, etc.).

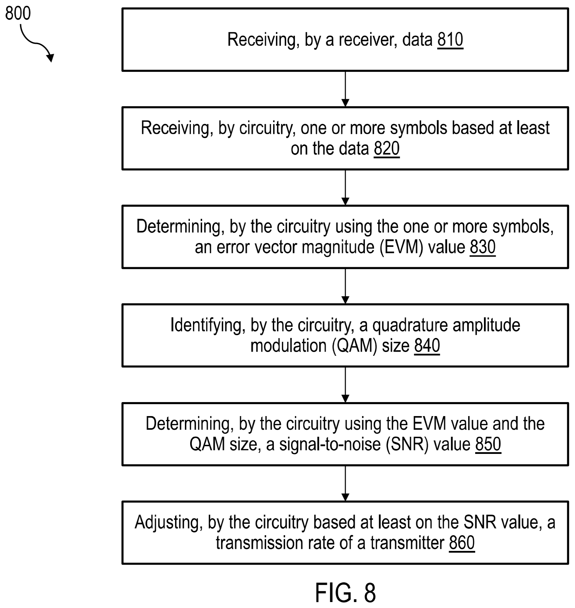

FIG. 8 is a flow diagram showing a process 800 for SNR and noise variance estimation from EVM, in accordance with an embodiment. In some embodiments, the process 800 is performed by one or more processors of a device (e.g., the device 102, the network device 106, etc.), the apparatus of the system 200, etc. In other embodiments, the process 800 is performed by other entities. In some embodiments, the process 800 includes more, fewer, or different steps than shown in FIG. 8.

At step 810, one or more processors may receive, by a receiver, data. At step 820, the one or more processors may receive, by circuitry, one or more symbols based at least on the data. In some embodiments, at step 820, the circuitry (e.g., the system 200) receives the one or more symbols (e.g., the rx symbols 21). In some embodiments, at step 820, a demodulator (e.g., the demodulator 210) of the circuitry receives the one or more symbols, while an EVM-NDA unit (e.g., the EVM-NDA unit 230) receives a transmitted symbol vector (e.g., the transmitted symbol vector 23) corresponding to the one or more symbols.

At step 830, the one or more processors may determine, by the circuitry using the one or more symbols, an error vector magnitude (EVM) value. In some embodiments, the circuitry determines the EVM value (e.g., the EVM value 25). In some embodiments, the circuitry determines the EVM value based on an estimated symbol vector (e.g., the estimated symbol vector 24) and the transmitted symbol vector.

At step 840, the one or more processors may identify, by the circuitry, a quadrature amplitude modulation (QAM) size. In some embodiments, the circuitry receives the QAM size (e.g., the QAM size 26). In some embodiments, the circuitry identifies the QAM size from a modulation and coding schemes (MCS) table.

At step 850, the one or more processors may determine, by the circuitry using the EVM value and the QAM size, a signal-to-noise (SNR) value. In some embodiments, the circuitry determines the SNR value (e.g., the estimated SNR 28) based on the EVM value and the QAM size. In some embodiments, the circuitry calculates the SNR value corresponding to the EVM value based at least on the QAM size. In some embodiments, the circuitry identifies the SNR value using a look-up table (LUT) (e.g., the LUT 300B, the LUT 400B, etc.). In some embodiments, the circuitry identifies the SNR value using a table, a list, a dictionary or any such pre-defined mapping either memory or on the fly.

In some embodiments, the circuitry determines the SNR value by identifying a first EVM value (e.g., the dot 55A) and a second EVM value (e.g., the dot 55B) using the LUT, and calculating, using an interpolation, the SNR value within a range between the first EVM value and the second EVM value. In some embodiments, the circuitry determines the SNR value by identifying the SNR value using a function (e.g., Eq. (1)) of an SNR value and a QAM size. In some embodiments, the circuitry determines the SNR value by identifying the SNR value using a nonlinear relationship between the SNR value and the QAM size.

At step 860, the one or more processors may adjust, by the circuitry based at least on the SNR value, a transmission rate of a transmitter. In some embodiments, the one or more processors may transmit, by the transmitter, data using the transmission rate.

As discussed above, the present disclosure provides techniques for accurately mapping NDA EVM to SNR for a given QAM constellation size. In some embodiments, the techniques utilize look up table(s) (LUTs) to map EVM to SNR and/or SNR to EVM for given QAM sizes (e.g., QAM sizes used in 802.11 standards based WiFi communications). In some embodiments, the techniques include determining/utilizing the LUTs that is based on non-linear relationships between SNR, EVM and the QAM constellation size. The techniques can be used in link adaptation. For example, in WiFi communications, EVM can be used as a feedback metric indicating the channel quality, and then a transmitter can use the SNR-EVM relationship to infer an SNR based on a QAM size. In some embodiments, the techniques include estimating SNR using the mapping from the calculated EVM and then using SNR as a feedback metric for link adaptation. This offers a faster and more accurate estimate of SNR, especially in blind processing situations (e.g., without having to use pilots or other noise estimation procedures).

Furthermore, the techniques disclosed herein can measure SNR directly from a packet (e.g., standards based packet communications as followed in 802.11 WLAN, 3GPP or non-standards communications using modulations such as BPSK, QPSK, QAM) without having to use explicit pilots or preamble. For example, in OFDM systems, the techniques disclosed herein can be used on a subcarrier basis, a group of subcarriers, or an average EVM over all or subset of the subcarriers. The techniques can be seamlessly applied to single antenna communications or MIMO. For example, the techniques can be applied on a per stream basis. In MIMO, combined EVM can be first calculated across all streams, and then this combined value can be translated into per-stream SNR. The techniques can be used in a physical layer abstraction mapping such as Received Bit Information Rate (RBIR), Effective Exponential Signal to Interference Plus Noise Ratio (SINR) Metric method. The techniques disclosed herein can be applied to unequal QAM communications across MIMO streams as proposed in 802.11bn, beamformed communications, etc.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

**Claims**

1. An apparatus comprising:

   a receiver configured to receive data; and
   circuitry configured to:

   receive one or more symbols based at least on the data;
   determine, using the one or more symbols, an error vector magnitude, EVM, value;
   identify a quadrature amplitude modulation, QAM, size;
   determine, using the EVM value and the QAM size, a signal-to-noise, SNR, value; and
   adjust, based at least on the SNR value, a transmission rate of a transmitter.

2. The apparatus of claim 1, wherein
   in determining the SNR value, the circuitry is configured to calculate the SNR value corresponding to the EVM value based at least on the QAM size.

3. The apparatus of claim 1 or 2, wherein
   in determining the SNR value, the circuitry is configured to identify the SNR value using a look-up table, LUT.

4. The apparatus of any one of the claims 1 to 3, wherein
   in determining the SNR value, the circuitry is configured to:

   identify a first EVM value and a second EVM value using an LUT; and
   calculate, using an interpolation, the SNR value within a range between the first EVM value and the second EVM value.

5. The apparatus of any one of the claims 1 to 4, wherein
   in determining the SNR value, the circuitry is configured to identify the SNR value using a function of an SNR value and a QAM size.

6. The apparatus of any one of the claims 1 to 5, wherein
   in determining the SNR value, the circuitry is configured to identify the SNR value using a nonlinear relationship between the SNR value and the QAM size.

7. The apparatus of any one of the claims 1 to 6, wherein
   in identifying the QAM size, the circuitry is configured to identify the QAM size from a modulation and coding schemes, MCS, table.

8. A method comprising:

   receiving, by a receiver, data; and
   receiving, by circuitry, one or more symbols based at least on the data;
   determining, by the circuitry using the one or more symbols, an error vector magnitude (EVM) value;
   identifying, by the circuitry, a quadrature amplitude modulation, QAM, size;
   determining, by the circuitry using the EVM value and the QAM size, a signal-to-noise (SNR) value; and
   adjusting, by the circuitry based at least on the SNR value, a transmission rate of a transmitter.

9. The method of claim 8, comprising at least one of the following features:

   (A) determining the SNR value comprises calculating the SNR value corresponding to the EVM value based at least on the QAM size;
   (B) determining the SNR value comprises identifying the SNR value using a look-up table, LUT;

(C) determining the SNR value comprises identifying a first EVM value and a second EVM value using an LUT; and

calculating, using an interpolation, the SNR value within a range between the first EVM value and the second EVM value;

(D) determining the SNR value comprises identifying the SNR value using a function of an SNR value and a QAM size;

(E) determining the SNR value comprises identifying the SNR value using a nonlinear relationship between the SNR value and the QAM size; and

(F) identifying the QAM size comprises identifying the QAM size from a modulation and coding schemes, MCS, table.

10. An apparatus comprising:

a transmitter; and
circuitry configured to:

receive one or more symbols based at least on data received by a receiver;
determine, using the one or more symbols, an error vector magnitude (EVM) value;
identify a quadrature amplitude modulation, QAM, size;
determine, using the EVM value and the QAM size, a signal-to-noise, SNR, value;
adjust, based at least on the SNR value, a transmission rate; and
transmit, by the transmitter, data using the transmission rate.

11. The apparatus of claim 10, wherein
in determining the SNR value, the circuitry is configured to calculate the SNR value corresponding to the EVM value based at least on the QAM size.

12. The apparatus of claim 10 or 11, wherein
in determining the SNR value, the circuitry is configured to identify the SNR value using a look-up table, LUT.

13. The apparatus of any one of the claims 10 to 12, wherein
in determining the SNR value, the circuitry is configured to:

identify a first EVM value and a second EVM value using an LUT; and
calculate, using an interpolation, the SNR value within a range between the first EVM value and the second EVM value.

14. The apparatus of any one of the claims 10 to 13, wherein
in determining the SNR value, the circuitry is configured to identify the SNR value using a function of an SNR value and a QAM size.

15. The apparatus of any one of the claims 10 to 14, wherein
in determining the SNR value, the circuitry is configured to identify the SNR value using a nonlinear relationship between the SNR value and the QAM size.

FIG. 1A

FIG. 1B

EP 4 738 738 A1

FIG. 1C

EP 4 738 738 A1

FIG. 2

EP 4 738 738 A1

300A

FIG. 3A

EP 4 738 738 A1

300B

241x7 Matrix {Float64}:

Index: Quantized SNR (dB)

| | | | | | | |
|---|---|---|---|---|---|---|
| 60.0 | 59.9931 | 59.9907 | 59.9894 | 59.9887 | 59.9884 | 59.9882 |
| 59.5 | 59.4927 | 59.4902 | 59.4888 | 59.4881 | 59.4877 | 59.4875 |
| 59.0 | 58.9922 | 58.9896 | 58.9881 | 58.9874 | 58.9869 | 58.9867 |
| 58.5 | 58.4918 | 58.489 | 58.4874 | 58.4866 | 58.4862 | 58.486 |
| 58.0 | 57.9913 | 57.9883 | 57.9867 | 57.9858 | 57.9854 | 57.9851 |
| 57.5 | 57.4908 | 57.4876 | 57.4859 | 57.485 | 57.4845 | 57.4842 |
| 57.0 | 56.9902 | 56.9869 | 56.985 | 56.9841 | 56.9836 | 56.9833 |
| ⋮ | | | | | ⋮ | |
| -57.5 | -57.5 | -57.5 | -57.5 | -57.5 | -57.5 | -57.5 |
| -58.0 | -58.0 | -58.0 | -58.0 | -58.0 | -58.0 | -58.0 |
| -58.5 | -58.5 | -58.5 | -58.5 | -58.5 | -58.5 | -58.5 |
| -59.0 | -59.0 | -59.0 | -59.0 | -59.0 | -59.0 | -59.0 |
| -59.5 | -59.5 | -59.5 | -59.5 | -59.5 | -59.5 | -59.5 |
| -60.0 | -60.0 | -60.0 | -60.0 | -60.0 | -60.0 | -60.0 |

• **LUT_SNR2EVM**

BPSK, QPSK, 16-QAM, 64-QAM, 256-QAM, 1K-QAM, 4K-QAM (left to right)

FIG. 3B

FIG. 4A

400A

EP 4 738 738 A1

400B

317x7 Matrix {Float64}:

| Index: Quantized EVM (dB) | | | | | | |
|---|---|---|---|---|---|---|
| -19.5 | -20.1467 | -20.3671 | -20.4831 | -20.5442 | -20.5758 | -20.5919 |
| -19.25 | -19.9132 | -20.1394 | -20.2585 | -20.3211 | -20.3534 | -20.3698 |
| -19.0 | -19.6802 | -19.9121 | -20.034 | -20.0983 | -20.1314 | -20.1483 |
| -18.75 | -19.4473 | -19.6854 | -19.8105 | -19.8762 | -19.91 | -19.9272 |
| -18.5 | -19.215 | -19.459 | -19.5873 | -19.6547 | -19.6895 | -19.7071 |
| -18.25 | -18.9828 | -19.2335 | -19.3648 | -19.4336 | -19.4691 | -19.4871 |
| -18.0 | -18.7513 | -19.0079 | -19.1428 | -19.2136 | -19.25 | -19.2685 |
| ⋮ | | | | | ⋮ | |
| 58.25 | 58.25 | 58.25 | 58.25 | 58.25 | 58.25 | 58.25 |
| 58.5 | 58.5 | 58.5 | 58.5 | 58.5 | 58.5 | 58.5 |
| 58.75 | 58.75 | 58.75 | 58.75 | 58.75 | 58.75 | 58.75 |
| 59.0 | 59.0 | 59.0 | 59.0 | 59.0 | 59.0 | 59.0 |
| 59.25 | 59.25 | 59.25 | 59.25 | 59.25 | 59.25 | 59.25 |
| 59.5 | 59.5 | 59.5 | 59.5 | 59.5 | 59.5 | 59.5 |

• **LUT_EVM2SNR**

BPSK, QPSK, 16-QAM, 64-QAM, 256-QAM, 1K-QAM, 4K-QAM (left to right)

FIG. 4B

**FIG. 5**

EP 4 738 738 A1

600A

600B

Transmitted Constellation: M= 4096

Received Constellation with AWGN @ SNR= 20 dB

FIG. 6A

FIG. 6B

FIG. 7A

FIG. 7B

EP 4 738 738 A1

800

```
┌─────────────────────────────────────────────┐
│       Receiving, by a receiver, data 810      │
└─────────────────────────────────────────────┘
                        ↓
┌─────────────────────────────────────────────┐
│  Receiving, by circuitry, one or more symbols │
│        based at least on the data 820         │
└─────────────────────────────────────────────┘
                        ↓
┌─────────────────────────────────────────────┐
│ Determining, by the circuitry using the one   │
│ or more symbols, an error vector magnitude    │
│            (EVM) value 830                     │
└─────────────────────────────────────────────┘
                        ↓
┌─────────────────────────────────────────────┐
│  Identifying, by the circuitry, a quadrature   │
│   amplitude modulation (QAM) size 840         │
└─────────────────────────────────────────────┘
                        ↓
┌─────────────────────────────────────────────┐
│ Determining, by the circuitry using the EVM   │
│ value and the QAM size, a signal-to-noise     │
│           (SNR) value 850                      │
└─────────────────────────────────────────────┘
                        ↓
┌─────────────────────────────────────────────┐
│ Adjusting, by the circuitry based at least on │
│ the SNR value, a transmission rate of a        │
│           transmitter 860                      │
└─────────────────────────────────────────────┘
```

FIG. 8

**EUROPEAN SEARCH REPORT**

Application Number

EP 25 21 3253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 826 521 B1 (SUN QINFANG [US] ET AL) 2 November 2010 (2010-11-02) * columns 4-6; figure 2 * ----- | 1-15 | INV. H04L1/00 H04B17/00 H04L1/20 |

TECHNICAL FIELDS SEARCHED (IPC)

H04L
H04B

The present search report has been drawn up for all claims

| Place of search | Date of completion of the search | Examiner |
|---|---|---|
| Munich | 19 March 2026 | Flores Sanchez, L |

EPO FORM 1503 03.82 (P04C01)

## ANNEX TO THE EUROPEAN SEARCH REPORT
## ON EUROPEAN PATENT APPLICATION NO.

EP 25 21 3253

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2026

| Patent document cited in search report | Publication date | Patent family member(s) | Publication date |
|---|---|---|---|
| US 7826521 B1 | 02-11-2010 | NONE | |

EPO FORM P0459